# EUROPÄISCHE PATENTSCHRIFT

(11) **EP 2 054 586 B1**
(45) Veröffentlichungstag und Bekanntmachung des Hinweises auf die Patenterteilung: **31.03.2010**
(21) Anmeldenummer: 07786864.4
(22) Anmeldetag: 27.06.2007
(51) Int. Cl.: F01D 5/18, F01D 25/32, F01D 5/08

(54) **GASTURBINE**
GAS TURBINE
TURBINE À GAZ

(30) Priorität: 22.08.2006 EP 06017465
(43) Veröffentlichungstag der Anmeldung: 06.05.2009
(73) Patentinhaber: SIEMENS AKTIENGESELLSCHAFT, 80333 München (DE)
(72) Erfinder: MILDNER, Frank, 47495 Rheinberg (DE)
(86) Internationale Anmeldenummer: PCT/EP2007/056424
(87) Internationale Veröffentlichungsnummer: WO 2008/022831

(56) Entgegenhaltungen:
- WO-A-03/036051
- DE-A1-102004 061 173
- JP-A- 8 177 526
- US-A- 4 462 204
- US-A- 4 820 116

## Beschreibung

Die Erfindung betrifft eine Gasturbine gemäß dem Oberbegriff des Anspruchs 1.

Gasturbinen und deren Funktionsweise sind allgemein bekannt. Während des Betriebes der Gasturbine wird zur Kühlung der Turbinenleit- und -laufschaufeln Kühlluft mit einem Kühldruckniveau benötigt, welches üblicherweise am Austritt des Gasturbinenverdichters bzw. dessen Diffusor bereitsteht und demgemäß dort entnommen wird. Obwohl die vom Verdichter bereitgestellte verdichtete Luft bereits im dem Verdichter vorgeschalteten Ansaughaus vorgefiltert wird, reichen die dort angeordneten Filter nicht aus, um die Kühlluft, die durch die dem Heißgas ausgesetzten Bauteile der Gasturbine strömt, anforderungsgerecht zu reinigen. Die von der Verdichterendluft mitgeführten Schmutzpartikel stellen zumindest für den Teil der Verdichterendluft, welcher als Kühlluft zur Turbinenkühlung eingesetzt wird, eine Gefährdung dar. Die Gefährdung liegt insbesondere in der Verstopfung der zur Prallkühlung der Turbinenschaufeln erforderlichen Kühlluftbohrungen aufgrund der sich daran ablagernden Schmutzpartikeln, die in der Kühlluft mitgeführt werden. Es kann dadurch die erforderliche Kühlung der Turbinenschaufeln unter Umständen nicht dauerhaft gewährleistet werden.

Aus diesem Grunde muss die der Turbine zur Verfügung gestellte Kühlluft durch zusätzliche Maßnahmen gereinigt werden, um derartige Störungen auszuschließen.

Hierzu sind beispielsweise im Inneren der Gasturbine angeordnete Filterrohre bekannt, die jedoch hohe Kosten und zudem eine komplizierte Konstruktion verursachen. Weiterhin sind am Verdichterausgang befestigte Bleche zum Ablenken der Partikel bekannt. Ein derartiges Ablenkblech zeigt beispielsweise die US 4,820,116. Das dem Verdichter zugewandtem Ende des Bleches ist dabei an einer Diffusorwand befestigt. Das andere, der Turbine zugewandte Ende des Bleches ist freistehend und überragt dabei teilweise die Entnahmeöffnung für Kühlluft, wobei ein Einströmen von Kühlluft in radialer Richtung möglich ist. Dies führt zu Dreckabscheidungsraten, die nicht ausreichend sein können.

Davon ausgehend ist die Aufgabe der Erfindung die Bereitstellung einer gattungsgemäßen Gasturbine, bei der eine Gefährdung der Turbinenkühlung weiter verringert ist.

Zur Lösung der Aufgabe wird mit der Erfindung vorgeschlagen, dass zur Entnahmeöffnung radial weiter außen benachbart ein Schutzelement zur Schmutzpartikelabscheidung vorgesehen ist, welches das Einströmen von in der Verdichterendluft schwebenden Partikeln in die Entnahmeöffnung erschwert. Das Schutzelement ist dabei als Trennblech ausgebildet, welches mit seinem der Turbine zugewandten Ende am turbinenseitigen Gehäuse fest verbunden ist. Durch dieses Schutzelement wird die Sauberkeit der Turbinenkühlluft weiter verbessert; der Anteil von möglicherweise schädlichen Partikeln in der Kühlluft wird signifikant gesenkt, so dass Verstopfungen von Kühlluftbohrungen weit seltener auftreten oder gar vermieden werden können. Obwohl das Schutzelement unter Abstand zu den Entnahmeöffnungen angebracht ist und in den Hohlraum axial hineinragt, hat es sich herausgestellt, dass dieses Schutzelement das Einströmen der Partikel in die Eintrittsöffnungen des Kühlkanalsystems der Turbine wirksam verhindert. In unerwarteter Weise hat außerdem die Ablenkung der im Hohlraum auftretenden Strömung der Verdichterendluft zu keiner Beeinträchtigung der Kühlung der luftgekühlten Brennkammer geführt, was der Verwendung eines derartigen Schutzelementes hätte entgegenstehen können.

Das Schutzelement ist als ringförmiges Trennblech ausgebildet, wodurch die bzw. alle Entnahmeöffnungen für Kühlluft mit einem darüber beabstandeten Trennblech vollständig abgedeckt werden. Auf diese Art und Weise verhindert das Trennblech insbesondere das Einströmen von in der Verdichterendluft mitgeführten Partikeln in die Entnahmeöffnungen.

Dementsprechend führt die vorgeschlagene Maßnahme zu einer dauerhaft schadfreien Kühlung von Turbinenbauteilen, wodurch sowohl deren Lebensdauer als auch die Verfügbarkeit der Gasturbine gesteigert werden kann.

Weitere vorteilhafte Ausgestaltungen der Erfindungen sind in den Unteransprüchen angegeben.

Besonders vorteilhaft ist die Ausgestaltung, bei der das Schutzelement ein dem Verdichter zugewandtes Ende und ein gegenüberliegendes, an der Turbine befestigtes Ende aufweist, wobei das turbinenseitige Ende auf einem kleineren Radius angeordnet ist als das verdichterseitige Ende. Folglich bildet das Schutzelement in der oberen Hälfte der zur Maschinenachse symmetrischen Gasturbine eine schiefe Ebene, auf der sich die Partikel absetzen und ablagern können. Die Neigung des Schutzelementes ist dabei so gewählt, dass dessen freies Ende, welches dem Verdichter zugewandt ist, höher liegt als sein festes Ende, welches der Turbine zugewandt ist. Dementsprechend wird so in der oberen Hälfte der Gasturbine eine Partikelfalle für in der Verdichterendluft schwebende Verschmutzungspartikel gebildet. Auch das schwerkraftbedingte Einströmen von Partikeln in die Entnahmeöffnungen wird in der oberen Hälfte der Gasturbine, in der dieses Problem auftreten kann, sicher vermieden.

In einer vorteilhaften Weiterbildung der Erfindung ist die oder jede Entnahmeöffnung in einer Oberfläche eines den Rotor umgreifenden Wellenschutzes vorgesehen. Alternativ dazu kann die oder jede Entnahmeöffnung auch als Spalt ausgebildet sein, welcher von einer stirnseitigen Oberfläche des Rotors und einem feststehenden Wellenschutz gebildet ist. Durch diese Maßnahmen kann in besonders strömungstechnisch effizienter Weise die Entnahme eines Teils der Verdichterendluft als Kühlluft aus dem Hohlraum erfolgen und die Kühlluft in den Rotor eingeleitet werden.

Die Abscheidungsraten für Partikel können besonders hoch sein, wenn das Schutzelement die entlang der Maschinenachse gesehene Erstreckung jeder Entnahmeöffnung vollständig, aber dazu beabstandet abdeckt.

Die Erfindung findet darüber hinaus insbesondere in einer axial durchströmbaren stationären Gasturbine Verwendung, welche mit mehreren konzentrisch zur Mittelachse angeordneten und über den Umfang gleichmäßig verteilten Rohrbrennkammern ausgestattet ist.

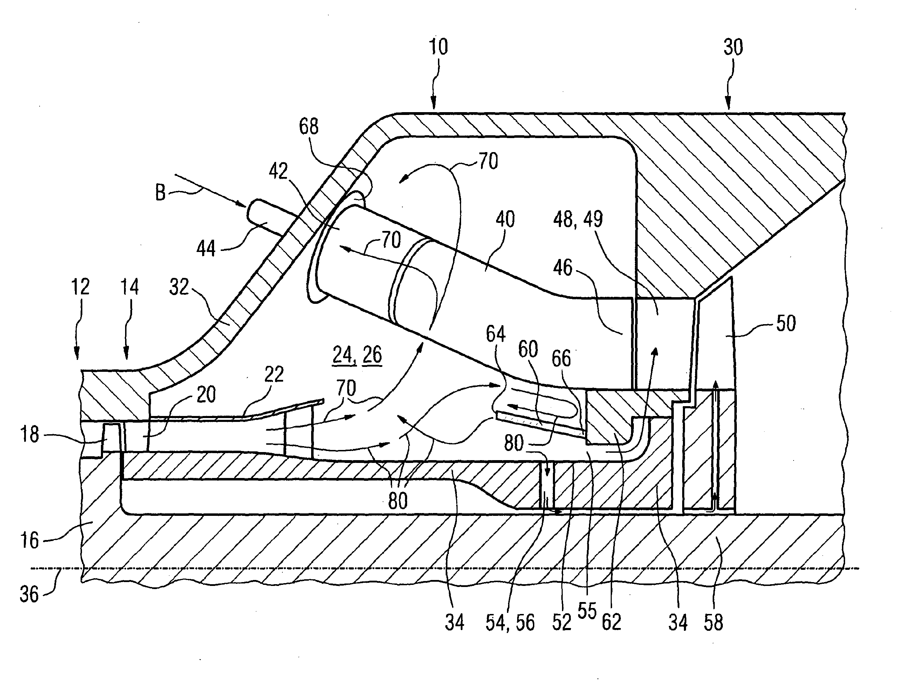

Die Erfindung wird anhand einer Zeichnung erläutert. Die einzige Figur zeigt eine abstrakte Darstellung durch den Längsschnitt einer Gasturbine im Bereich zwischen dem austrittsseitigen Ende des Verdichters und dem Turbineneintritt.

Im Detail zeigt die Figur einen Längsschnitt durch eine axial durchströmte, stationäre Gasturbine 10 im axialen Abschnitt zwischen austrittsseitigem Ende des Verdichters 12 und Turbineneintritt. Von dem Verdichter 12 der Gasturbine 10 ist lediglich die letzte Verdichterstufe 14 mit einer am Rotor 16 angeordneten Laufschaufel 18 und einer, bezogen auf die den Verdichter 14 durchströmende Luft, stromabwärts davon gelegenen Leitschaufel 20 dargestellt. Weiter stromab der Verdichterleitschaufel 20 ist ein Verdichterdiffusor 22 vorgesehen, durch den die aus dem Ende des Verdichters 12 austretende verdichtete Luft in einen Hohlraum 24 einströmen kann. Der Hohlraum 24, welcher auch als Brennkammerplenum 26 oder auch kurz nur als Plenum bezeichnet wird, liegt axial gesehen zwischen dem Verdichter 12 und der Turbine 30. Radial gesehen ist das Plenum 26 zwischen einem weiter außen liegendem Gehäuse 32 und dem weiter innen liegenden Rotor 16 bzw. einem Wellenschutz 34 angeordnet. Der Wellenschutz 34 ist rotorseitig angeordnet und umgreift diesen. Er ist verdichterseitig drehfest über den Verdichterdiffusor 22 bzw. über die Verdichterleitschaufeln 20 mit dem Gehäuse 32 und turbinenseitig mit den Leitschaufeln 49 der Turbine 30 fest verbunden. Außerdem sind im Inneren des Plenums 26 mehrere konzentrisch zu einer Maschinenachse 36 angeordnete und über den Umfang gleichmäßig verteilte Rohrbrennkammern 40 vorgesehen, von denen nur eine dargestellt ist. Jede Rohrbrennkammer 40 weist an ihrem geschlossenen, dem Verdichter 12 zugewandtem Ende 42 einen Brenner 44 zur Zufuhr eines brennbaren Mediums B auf. Die dem geschlossenen Enden 42 gegenüberliegenden offenen Enden 46 der Rohrbrennkammern 40 gehen in einen ringförmigen Heißgaskanal über, in welchem eine der Leitschaufeln 49 der ersten Turbinenstufe 48 schematisch skizziert ist. Weiter stromab folgt die am Rotor 16 befestigte Turbinenlaufschaufel 50.

Der um die Maschinenachse 36 drehbare Rotor 16 der Gasturbine 10 umfasst, obwohl nicht skizziert, mehrere Rotorscheiben, welche durch einen zentralen oder mehrere dezentrale Zuganker miteinander verspannt sind. Ein Teil der Rotorscheiben tragen die Laufschaufeln 18, 50 von Verdichter 12 und Turbine 30.

Im feststehenden Wellenschutz 34 sind mehrere, entlang des Umfangs verteilte Bohnrungen 56 vorgesehen, deren in der dem Hohlraum 24 zugewandten Oberfläche 52 des Wellenschutzes angeordnete Öffnungen als Entnahmeöffnungen 54 ausgebildet sind. Durch diese Bohrungen 56 kann die dem Plenum 26 durch den Verdichterdiffusor 22 zugeführte Verdichterendluft teilweise zur Kühlung von Turbinenbauteilen entnommen werden. Eine ringförmige zweite Entnahmeöffnung 55 ist zwischen einem Leitschaufeldeckband 62 der Leitschaufel 49 und einen zweiten Abschnitt des Wellenschutzes 34 vorgesehen. Die Entnahmeöffnungen 54, 55 sind somit in denjenigen Begrenzungswänden des Hohlraums 24 vorgesehen, die rotorseitig, d.h. radial innen sind. Es kann aber auch anstelle der gezeigten Lösung vorgesehen sein, die die Entnahmeöffnung 54 unmittelbar im Rotor 16 vorzusehen.

Stromabwärts der Entnahmeöffnungen 54 wird die entnehmbare Verdichterendluft über ein im und/oder am Rotor 16 angeordnetes Kühlkanalsystem 58 den Laufschaufeln 50 der ersten Turbinenstufe 48 zur Kühlung zugeführt. Die durch die zweite Entnahmeöffnung 55 entnehmbare Verdichterendluft ist zur Kühlung der Turbinenleitschaufel 49 vorgesehen. Darüber hinaus kann die dem Plenum 26 entnommene Kühlluft auch weiteren, dem Heißgas ausgesetzten Bauteilen des Rotors 16 oder auch den Bauteilen der Turbine zugeführt werden.

Der größte Teil der dem Plenum 20 zugeführten Verdichterendluft dient zuerst zur Kühlung der Rohrbrennkammern 40 und im Anschluss daran zur Heißgaserzeugung durch Verbrennung des Brennmediums B. Dazu wird die Verdichterendluft über Öffnungen 68 einem nur schematisch angedeuteten Brennkammerkanalsystem zugeführt, welches es weiter zu den Brennern 44 leitet.

Um eine besonders reine, d.h. mit nur besonders wenigen Schmutzpartikeln beladene Kühlluft zur Kühlung von Turbinenbauteilen, beispielsweise Leitschaufeln 49 und/oder Laufschaufeln 50, bereitzustellen, ist, radial weiter außen als die Entnahmeöffnungen 54, 55 und zu diesen beabstandet, ein Schutzelement 60 zur Partikelabscheidung vorgesehen, welches das Einströmen von in der Verdichterendluft schwebenden Partikeln in die Entnahmeöffnungen 54, 55 erschwert. Das Schutzelement 60 ist als Trennblech ausgebildet, welches am Leitschaufeldeckband 62, also am radial inneren Ende der Leitschaufel 49, fest mit dem Gehäuse 32 der Turbine 30 verbunden ist. Beispielsweise kann das Schutzelement 60 als ringförmiges Trennblech die Maschinenachse 36 konisch umgreifen, so dass dessen dem Verdichter 12 zugewandte freie Ende 64 auf einem größeren Radius angeordnet ist als das an der Turbine 30 festgelegte, gegenüberliegende Ende 66.

In einer alternativen Ausgestaltung kann der Wellenschutz 34 im Vergleich zu der dargestellten Lösung auch verkürzt ausgebildet sein, so dass in der Umfangsfläche des Rotors 16 angeordneten Entnahmeöffnungen 54 von über den Umfang verteilten, in einer Rotorscheibe angeordneten Bohrungen gebildet sein können, die mit dem Kühlkanalsystem 58 in Strömungsverbindung stehen.

Das in der Zeichnung oberhalb der Entnahmeöffnung 54 dargestellte Schutzelement 60 bewirkt eine Abscheidung der in der Verdichterendluft schwebenden Partikel, wie nachfolgend beschrieben. Partikel in einer Größenordnung von ungefähr 10 µm folgen hauptsächlich der Hauptströmung 70 der aus dem Verdichterdiffusor 22 austretenden Verdichterendluft, so dass diese das Plenum 26 zusammen mit dem Großteil der Verdichterendluft durch die an der Rohrbrennkammer 40 angeordnete Öffnungen 68 verlassen, um den Brennern 44 zugeführt und verbrannt zu werden. Der Weg dieser Hauptströmung 70 einschließlich der von ihr mitgeführten kleinen Partikel (~10 µm) ist im Wesentlichen durch den mit dem Bezugszeichen 70 dargestellten Pfeilen skizziert.

Da die vergleichsweise kleinen Partikel im Plenum 26 der Hauptströmung 70 folgen, erreichen diese nicht die Entnahmeöffnungen 54, 55 des Kühlkanalsystems 58, so dass aus diesem Grund das horizontale Trennblech für diese Partikelgröße keinen signifikanten Einfluss hat.

Größere Partikel in einer Größenordnung größer 50 µm werden durch das annährend horizontal angeordnete Trennblech von dem Eintreten in das Kühlkanalsystem 58 abgehalten. Derartig große Partikel, die mit der Verdichterendluft aus dem Verdichterdiffusor 22 strömen, treffen auf die Rohrbrennkammer 40 und werden von dieser nach unten abgelenkt. Anschließend strömt dieser abgelenkte Teil 80 der Verdichterendluft mitsamt den Partikeln in Richtung Turbine 30 und trifft dann von radial außen kommend auf die äußere Seite des Trennblechs. Von hier aus strömt die Verdichterendluft horizontal weiter in Richtung Verdichterdiffusor 22 bzw. Verdichter 12. Da das Schutzelement 60 die gesamte axiale Erstreckung der Entnahmeöffnung 54 überragt, können die Partikel trotz der auf sie einwirkenden Kraft von den Entnahmeöffnungen 54 des Kühlkanalsystems 58 ferngehalten werden. Im weiteren Verlauf nimmt die Hauptströmung 70 die zum Verdichter 12 geführten, größeren Partikel mit und transportiert sie zu den Öffnungen 68, wo die Partikel dann das Plenum 26 verlassen. Dieser beschriebene Weg der Partikel mit einer Größenordnung größer 50 µm ist durch die mit dem Bezugszeichen 80 versehenen Pfeilen in der Figur dargestellt.

Aufgrund der sich oberhalb des festen Endes 66 des Schutzelements 60 vorhandenen Eck-Gebiete mit vergleichsweise langsamen Strömungsgeschwindigkeiten ist außerdem an dieser Stelle eine Ablagerungsmöglichkeit für Partikel geschaffen, was die Reinheit der Kühlluft weiter erhöht. Die sich an dieser Stelle ablagernden Partikel sind für die Gasturbine und deren Betrieb schadlos.

Insgesamt wird mit der Erfindung eine wirkungsvolle Maßnahme zur Säuberung von in der Turbine 30 verwendeten Kühlluft bereitgestellt, die besonders effizient ist. In das Kühlkanalsystem 58 der Turbine 30 kann somit vergleichsweise reine verdichtete Kühlluft einströmen, wodurch das Verstopfen von Kühlluftbohrungen der von Heißgas beaufschlagten prallgekühlten Turbinenbauteile vermieden werden kann.

## Patentansprüche

1. Gasturbine (10),
mit einem Gehäuse (32), in dem entlang einer Maschinenachse (36) aufeinander folgend ein Verdichter(12), mindestens eine Brennkammer (40) und eine Turbine (30) angeordnet sind, und mit einem sich entlang der Maschinenachse (36) erstreckenden Rotor (16),
wobei axial gesehen zwischen dem Verdichter (12) und der Turbine (30) und radial gesehen zwischen dem Gehäuse (32) und dem Rotor (16) ein zur Maschinenachse (36) konzentrischer Hohlraum (24) vorgesehen ist, in dem die Brennkammer(n) (40) angeordnet ist bzw. sind, und
wobei dem Hohlraum (24) die im Verdichter (12) verdichtete Ansaugluft als Verdichterendluft zuführbar ist und zur Turbinenkühlung über mindestens eine rotorseitige Entnahmeöffnung (54, 55) ein Teil der Verdichterendluft als Kühlluft dem Hohlraum (24) entnehmbar ist,
wobei zur Entnahmeöffnung (54, 55) radial weiter außen benachbart ein Schutzelement (60) zur Partikelabscheidung vorgesehen ist, welches das Einströmen von in der Verdichterendluft schwebenden Partikeln in die Entnahmeöffnung (54, 55) erschwert,
**dadurch gekennzeichnet, dass**
das Schutzelement (60) als Trennblech ausgebildet ist, welches mit seinem der Turbine (30) zugewandten Ende (66) am turbinenseitigen Gehäuse (32) fest verbunden und dessen dem Verdichter (12) zugewandtem Ende (64) freistehend ist.

2. Gasturbine (10) nach Anspruch 1,
bei der das Schutzelement (60) als ringförmiges Trennblech ausgebildet ist.

3. Gasturbine (10) nach Anspruch 1, oder 2,
bei der das Schutzelement (60) ein dem Verdichter (12) zugewandtes, der Turbine (30) gegenüberliegendes Ende (64) aufweist, wobei das turbinenseitige Ende (66) auf einem kleineren Radius angeordnet ist als das verdichterseitige Ende (64).

4. Gasturbine(10) nach einem der vorangehenden Ansprüche, bei der die oder jede Entnahmeöffnung (54, 55) in einer dem Hohlraum (24) zugewandten Oberfläche (52) eines Wellenschutzes (34) vorgesehen ist.

5. Gasturbine (10) nach einem der Ansprüche 1 bis 3,
bei der die oder jede Entnahmeöffnung (54) als Spalt ausgebildet ist, welcher von einer stirnseitigen Oberfläche (52) des Rotors (16) und einem feststehenden Wellenschutz (24) gebildet ist.

6. Gasturbine (10) nach einem der vorangehenden Ansprüche, bei der das Schutzelement (60) die entlang der Maschinenachse (36) gesehene Erstreckung jeder Entnahmeöffnung (54) vollständig überragt.

7. Axiale durchströmbare, stationäre Gasturbine (10) nach einem der vorangehenden Ansprüche,
mit mehreren, konzentrisch zur Maschinenachse (36) gleichmäßig verteilten Rohrbrennkammern (40).

## Claims

1. Gas turbine (10),
with a casing (32) in which a compressor (12), at least one combustion chamber (40) and a turbine (30) are arranged in series along a machine axis (36), and with a rotor (16) which extends along the machine axis (36),
wherein between the compressor (12) and the turbine (30), as seen axially, and between the casing (32) and the rotor (16), as seen radially, a cavity (24), which is concentric to the machine axis (36), is provided, in which the combustion chamber (40), or combustion chambers, is or are arranged, and
wherein the intake air, which is compressed in the compressor (12), can be fed to the cavity (24) as compressor exhaust air, and for turbine cooling some of the compressor exhaust air can be extracted as cooling air from the cavity (24) via at least one rotor-side extraction opening (54, 55),
wherein for the extraction opening (54, 55) a protective element (60) for particle deposition is adjacently provided radially further outwards, which impedes the inflowing of particles, which are suspended in the compressor exhaust air, into the extraction opening (54, 55),
**characterized in that**
the protective element (60) is formed as a separating plate which with its end (66) which faces the turbine (30) is connected in a fixed manner to the turbine-side casing (32), and the end (64) of which which faces the compressor (12) is free-standing.

2. Gas turbine (10) according to Claim 1,
in which the protective element (60) is formed as an annular separating plate.

3. Gas turbine (10) according to either of Claims 1 or 2,
in which the protective element (60) has an end (64) which faces the compressor (12) and is opposite the turbine (30), wherein the turbine-side end (66) is arranged on a smaller radius than the compressor-side end (64).

4. Gas turbine (10) according to one of the preceding claims,
in which the extraction opening (54, 55), or each extraction opening, is provided in a surface (52) of a shaft guard (34) which faces the cavity (24).

5. Gas turbine (10) according to one of Claims 1 to 3,
in which the extraction opening (54), or each extraction opening, is formed as a gap which is formed by a face-end surface (52) of the rotor (16) and by a fixed shaft guard (34).

6. Gas turbine (10) according to one of the preceding claims,
in which the protective element (60) completely projects over the extent of each extraction opening (54), as seen along the machine axis (36).

7. Stationary gas turbine (10) which is exposed to axial throughflow, according to one of the preceding claims,
with a plurality of tubular combustion chambers (40) which are uniformly distributed concentrically to the machine axis (36).

## Revendications

1. Turbine ( 10 ) à gaz,
comprenant un carter ( 12 ) dans lequel se succède, le long d'un axe ( 36 ) de machine, un compresseur ( 12 ) au moins une chambre de combustion ( 40 ) et une turbine ( 30 ) et
comprenant un rotor ( 16 ) s'étendant le long de l'axe ( 36 ) de machine,
dans laquelle il est prévu, vu axialement, entre le compresseur ( 12 ) et la turbine ( 30 ) et, vu radialement, entre le carter ( 32 ) et le rotor ( 16 ), un espace ( 24 ) creux concentrique à l'axe ( 36 ) de machine, dans lequel est ou sont disposée (s) la ou les chambres de combustion ( 40 ), et
dans laquelle il peut être envoyé, à l'espace ( 24 ) creux, l'air d'aspiration comprimé dans le compresseur ( 12 ) en tant qu'air de fin du compresseur et il peut être retiré de l'espace ( 24 ) creux pour le refroidissement de la turbine, par au moins une ouverture ( 54, 55 ) de prélèvement du côté du rotor, une partie de l'air de fin du compresseur en tant qu'air de refroidissement,
dans laquelle il est prévu pour l'ouverture ( 54, 55 ) de prélèvement au voisinage, plus loin radialement vers l'extérieur, un élément ( 60 ) de protection pour le dépôt de particules, qui rend plus difficile l'afflux dans l'ouverture ( 54, 55 ) de prélèvement de particules en suspension dans l'air de fin de compresseur,
**caractérisé en ce que**
l'élément ( 60 ) de protection est constitué sous la forme d'une tôle de séparation, qui est reliée de manière fixe, par son extrémité ( 66 ) tournée vers la turbine ( 60 ), au carter ( 32 ) du côté de la turbine et dont l'extrémité ( 64 ) tournée vers le compresseur ( 32 ) est libre.

2. Turbine ( 10 ) à gaz suivant la revendication 1,
dans laquelle l'élément ( 60 ) de protection est constitué sous la forme d'une tôle de séparation annulaire.

3. Turbine ( 10 ) à gaz suivant la revendication 1 ou 2,
dans laquelle l'élément ( 60 ) de protection a une extrémité ( 64 ) tournée vers le compresseur ( 12 ) et opposée à la turbine ( 30 ), l'extrémité ( 66 ) du côté de la turbine étant disposé sur un rayon plus petit que l'extrémité ( 64 ) du côté du compresseur.

4. Turbine ( 10 ) à gaz suivant l'une des revendications précédentes,
dans laquelle l'ouverture ou chaque ouverture ( 54, 55 ) de prélèvement est ménagée dans une surface ( 52 ) d'une protection ( 34 ) d'arbre, qui est tournée vers l'espace ( 24 ) creux.

5. Turbine ( 10 ) à gaz suivant l'une des revendications précédentes,
dans laquelle l'ouverture ou chaque ouverture ( 54 ) de prélèvement est constituée sous la forme d'une fente qui est formée par une surface ( 52 ) du côté frontal du rotor ( 16 ) et par une protection ( 24 ) d'arbre fixe.

6. Turbine ( 10 ) à gaz suivant l'une des revendications précédentes,
dans laquelle l'élément ( 60 ) de protection dépasse complètement l'étendue, le long de l'axe ( 36 ) de machine, de chaque ouverture ( 54 ) de prélèvement.

7. Turbine ( 10 ) à gaz fixe et à impulsion axiale suivant l'une des revendications précédentes, ayant plusieurs chambres de combustion ( 40 ) tubulaires réparties uniformément concentriquement à l'axe ( 36 ) de machine.
